(19) Europäisches Patentamt / European Patent Office / Office européen des brevets

(11) **EP 4 525 501 A1**

(12) **EUROPEAN PATENT APPLICATION**
published in accordance with Art. 153(4) EPC

(43) Date of publication:
**19.03.2025 Bulletin 2025/12**

(21) Application number: **23849228.4**

(22) Date of filing: **21.07.2023**

(51) International Patent Classification (IPC):
*H04W 16/00* (2009.01)    *H04W 72/04* (2023.01)

(52) Cooperative Patent Classification (CPC):
H04W 16/00; H04W 16/10; H04W 72/04;
H04W 72/12

(86) International application number:
**PCT/CN2023/108722**

(87) International publication number:
**WO 2024/027520 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.08.2022 CN 202210934727**

(71) Applicant: ZTE Corporation
Shenzhen, Guangdong 518057 (CN)

(72) Inventors:
• CHEN, Jie
  Shenzhen, Guangdong 518057 (CN)
• LU, Youxiong
  Shenzhen, Guangdong 518057 (CN)
• HE, Haigang
  Shenzhen, Guangdong 518057 (CN)
• MIAO, Ting
  Shenzhen, Guangdong 518057 (CN)

(74) Representative: Chimini, Francesco et al
Jacobacci & Partners S.p.A.
Piazza della Vittoria 11
25122 Brescia (IT)

(54) **RESOURCE MAPPING METHOD AND DEVICE, STORAGE MEDIUM, AND ELECTRONIC DEVICE**

(57)    Embodiments of the present disclosure provide a resource mapping method and device, a storage medium, and an electronic device. The method comprises: acquiring a resource mapping position of a sidelink synchronous broadcast information block (S-SSB) on an unlicensed spectrum; and mapping the S-SSB on the unlicensed spectrum on the basis of the resource mapping position.

**Fig. 4**

| Acquiring resource mapping positions of an S-SSB on an unlicensed spectrum | S402 |

↓

| Mapping the S-SSB on the unlicensed spectrum based on the resource mapping positions | S404 |

**Description**

**Cross-Reference to Related Application**

The present disclosure is based on and claims priority to Chinese Patent Application CN202210934727.1 filed on August 4, 2022 and entitled "Resource Mapping Method and Device, Storage Medium, and Electronic Device", the present disclosure of which is incorporated herein by reference in its entirety.

**Technical Field**

Embodiments of the present disclosure relate to the field of communications, and in particular, to a resource mapping method and device, a storage medium, and an electronic device.

**Background**

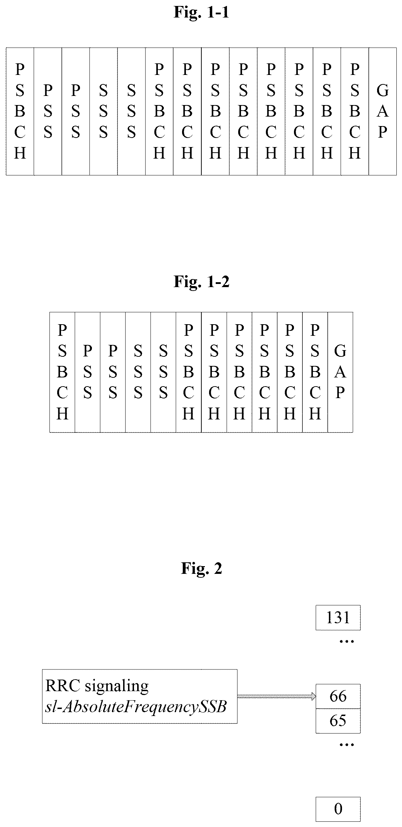

In the 3rd Generation Partnership Project (3GPP) Release-16 (Rel-16) New Radio (NR) protocol, a standard SideLink (SL) communication process is defined, including a resource determination method for a SideLink Synchronization Signal/Physical Sidelink Broadcast Channel block (SL S-SSB), a mapping method for S-SSB symbols, etc. For example, Rel-16 specifies that the S-SSB includes a Sidelink Primary Synchronization Signal (S-PSS), a Sidelink Secondary Synchronization Signal (S-SSS), and a Physical Sidelink Broadcast Channel (PSBCH), and an SL S-SSB slot is located outside an SL resource pool. Under a Normal Cyclic Prefix (CP) configuration, the S-SSB independently occupies 13 symbols on one slot; while under an Extended CP configuration, the S-SSB independently occupies 11 symbols on one slot. Fig. 1-1 is a schematic diagram of slot symbols configured with a Normal CP in the related art. Fig. 1-2 is a schematic diagram of slot symbols configured with an Extended CP in the related art.

In a frequency domain, the S-SSB occupies 11 consecutive RBs, equivalent to 132 REs. Further, a frequency domain position of the S-SSB is indicated to User Equipment (UE) through higher layer signaling or through pre-configuration. For example, higher layer signaling sl-Absolute Frequency S-SSB indicates to the UE a position, that is, an Absolute Radio Frequency Channel Number (ARFCN), of a subcarrier index 66 among 132 subcarriers in the S-SSB frequency domain. In such a case, the UE determines the frequency domain position of the S-SSB based on this indication. Fig. 2 is a schematic diagram illustrating a wireless frequency signal coding of an index of 66 among 132 subcarriers in the S-SSB frequency domain in the related art.

Furthermore, when an S-SSB transmission condition is satisfied, the UE maps various symbols of the S-SSB onto time-frequency resources of the S-SSB. The S-PSS and the S-SSS have 127 symbols, which are mapped onto the middle 127 subcarriers of the 132 subcarriers of the S-SSB resources. The PSBCH are fully mapped onto the 132 subcarriers of the entire S-SSB frequency domain. The specific mapping rules are pre-defined. The mapping rules in Rel-16 are shown in Table 1, which represents the resources for S-PSS, S-SSS, PSBCH, and DM-RS in the sidelink synchronization broadcast information block.

Table 1

| Channel or Signal | OFDM symbol number I relative to the start of an S-SS/PSBCH block | Subcarrier number k relative to the start of an S-SS/PSBCH block |
|---|---|---|
| S-PSS | 1, 2 | 2, 3, ..., 127, 128 |
| S-SSS | 3, 4 | 2, 3, ..., 127, 128 |
| Set to zero | 1, 2, 3, 4 | 0, 1, 129, 130, 131 |
| PSBCH | $0, 5, 6, \ldots, \ N_{\mathrm{symb}}^{\mathrm{S\text{-}SSB}} - 1$ | 0, 1, ..., 131 |
| DM-RS for PSBCH | $0, 5, 6, \ldots, \ N_{\mathrm{symb}}^{\mathrm{S\text{-}SSB}} - 1$ | 0, 4, 8, ...., 128 |

The research on an SL-U is established in 3GPP Rel-18, that is, a UE may perform an SL communication on an unlicensed spectrum, including transmission of an SL-SSB. However, in some regions, all signals or channels on unlicensed spectrum are required to meet Occupied Channel Bandwidth (OCB) requirements, which require that the transmitted signals or channels occupy 80% to 100% of the 20 MHz bandwidth. Generally, the signal transmission in the frequency domain either occupies more than 80% of consecutive Resource Block (RB) resources on one RBset or occupies at least one interleaving on the RBset. Since the number of RBs on one RBset or the number of RBs on at least one interleaving on one RBset is not 11 in many cases, the direct adoption of the frequency domain resource mapping scheme for legacy Rel-16/Rel-17 SL S-SSB cannot meet the SL-U OCB requirements.

Aiming at the technical problem that resource mapping for an SL S-SSB cannot be effectively performed on an unlicensed spectrum in the related art, no effective solution has been proposed.

## Summary

Embodiments of the present disclosure provide a resource mapping method and device, a storage medium, and an electronic device, which may at least solve the technical problem that resource mapping for an SL S-SSB cannot be effectively performed on an unlicensed spectrum in the related art.

According to some embodiments of the present disclosure, provided is a resource mapping method, including: acquiring resource mapping positions of a Sidelink Synchronization Signal/Physical Sidelink Broadcast Channel block (S-SSB) on an unlicensed spectrum; and mapping the S-SSB on the unlicensed spectrum based on the resource mapping positions.

In an exemplary embodiment, the resource mapping positions include at least one of: at least one Interleaved Resource Block (IRB) within a first Resource Block set (RBset); or a first predetermined number of consecutive Resource Blocks (RBs) included in a second Resource Block set (RBset).

In an exemplary embodiment, the acquiring resource mapping positions of a sidelink Synchronization Signal/Physical Sidelink Broadcast Channel block (S-SSB) on an unlicensed spectrum includes: in a case of determining that the S-SSB needs to be mapped onto one IRB in the first RBset, determining, based on received first higher layer signaling, an Absolute Radio Frequency Channel Number (ARFCN) of a target subcarrier index included in the S-SSB; and determining RBs at a first predetermined position on a first IRB of the RBset where the ARFCN is located as the resource mapping positions.

In an exemplary embodiment, the mapping the S-SSB on the unlicensed spectrum based on the resource mapping positions includes: determining a number of symbols to be punctured in a Sidelink Primary Synchronization Signal (S-PSS) and a Sidelink Secondary Synchronization Signal (S-SSS) included in the S-SSB, and performing symbol puncturing on the S-PSS and the S-SSS based on the number of symbols; performing rate matching on a Physical Sidelink Broadcast Channel (PSBCH) included in the S-SSB based on time domain Orthogonal Frequency Division Multiplexing (OFDM) symbols of the S-SSB; and mapping the S-PSS and the S-SSS after the symbol puncturing, and the PSBCH after the rate-matching onto the RBs at the first predetermined position on the first IRB on the corresponding time domain OFDM symbols on the S-SSB.

In an exemplary embodiment, the acquiring resource mapping positions of a sidelink Synchronization Signal/Physical Sidelink Broadcast Channel block (S-SSB) on an unlicensed spectrum includes: in a case of determining that the S-SSB needs to be mapped onto two IRBs in the first RBset, determining, based on received second higher layer signaling, an Absolute Radio Frequency Channel Number (ARFCN) of a target subcarrier index included in the S-SSB; and determining RBs at a second predetermined position on a second IRB of the RBset where the ARFCN is located and RBs at a third predetermined position on a third IRB having a target position relationship with the second IRB as the resource mapping positions.

In an exemplary embodiment, the mapping the S-SSB on the unlicensed spectrum based on the resource mapping positions includes: determining a first number of symbols to be punctured in a Sidelink Primary Synchronization Signal (S-PSS) and a Sidelink Secondary Synchronization Signal (S-SSS) included in the S-SSB, and determining a second number of symbols to be punctured in a Physical Sidelink Broadcast Channel (PSBCH) included in the S-SSB; performing symbol puncturing on the first number of symbols at a first position of the S-PSS and the first number of symbols at a second position of the S-SSS, and performing symbol puncturing on the second number of symbols at a third position of the PSBCH; and mapping the S-PSS, the S-SSS and the PBCH after the symbol puncturing onto the RBs at the second predetermined position on the second IRB on corresponding time domain Orthogonal Frequency Division Multiplexing (OFDM) symbols on the S-SSB; and performing symbol puncturing on the first number of symbols at a fourth position of the S-PSS and the first number of symbols at a fifth position of the S-SSS, and performing symbol puncturing on the second number of symbols at a sixth position of the PSBCH; and mapping the S-PSS, the S-SSS and the PBCH after the symbol puncturing onto the RBs at the third predetermined position on the third IRB on corresponding time domain OFDM symbols on the S-SSB, wherein the first position is different from the fourth position, the second position is different from the fifth position, and the third position is different from the sixth position.

In an exemplary embodiment, mapping the S-SSB onto the at least one IRB within the first RBset based on the resource mapping positions includes at least one of: dividing Resource Elements (REs) included in the RBs at the second predetermined position on the second IRB and REs included in the RBs at the third predetermined position on the third IRB into a plurality of RE groups; respectively selecting the same or different number of REs from each RE group in the plurality of RE groups, a total number of REs selected from the plurality of RE groups being a second predetermined number of REs included in the first predetermined number of RBs; and mapping the S-SSB onto the second predetermined number of REs on corresponding time domain Orthogonal Frequency Division Multiplexing (OFDM) symbols on the S-SSB; or determining the first predetermined number of RBs in the RBs at the second predetermined position on the second IRB and the RBs at the third predetermined position on the third IRB according to a frequency domain pattern; and mapping the S-SSB onto the determined first predetermined number of RBs on the corresponding time domain OFDM symbols on the S-SSB.

In an exemplary embodiment, the acquiring resource mapping positions of a Sidelink Synchronization Signal/-Physical Sidelink Broadcast Channel block (S-SSB) on an unlicensed spectrum includes: in a case of determining that the S-SSB needs to be mapped onto the first predetermined number of consecutive RBs included in the second RBset, determining, based on received second higher layer signaling, an Absolute Radio Frequency Channel Number (ARFCN) of a target subcarrier index included in the S-SSB; determining a plurality of target frequency domain resources based on the ARFCN, wherein each of the plurality of target frequency domain resources includes a second predetermined number of consecutive sub-carriers or a first predetermined number of consecutive RBs; and determining positions of the plurality of target frequency domain resources as the resource mapping positions.

In an exemplary embodiment, the mapping the S-SSB on the unlicensed spectrum based on the resource mapping positions includes: repeatedly mapping the S-SSB onto each of the target frequency domain resources on corresponding time domain Orthogonal Frequency Division Multiplexing (OFDM) symbols of the S-SSB.

In an exemplary embodiment, in a case of mapping the S-SSB onto the at least one IRB within the first RBset based on the resource mapping positions, no signal is transmitted on all RBs on an IRB adjacent to the at least one IRB, onto which the S-SSB is mapped, within the first RBset.

In an exemplary embodiment, in a case of mapping the S-SSB onto the second predetermined number of REs, no signal is transmitted on REs, onto which the S-SSB is not mapped, in the second IRB and the third IRB of the first RBset.

In an exemplary embodiment, the resource mapping method further includes: acquiring predetermined target information, wherein the target information includes the following information: a start position of N S-SSBs including the S-SSB within a target slot, wherein N is an integer greater than or equal to 1; a time domain length of the S-SSB; a time-frequency resource position of a Sidelink Primary Synchronization Signal (S-PSS) within the S-SSB; a time-frequency resource position of a Sidelink Secondary Synchronization Signal (S-SSS) within the S-SSB; a time-frequency resource position of a Physical Sidelink Broadcast Channel (PSBCH) within the S-SSB; and determining a time-frequency domain resource for transmitting the S-SSB based on the target information.

In an exemplary embodiment, in a case where N is greater than 1, indexes of the N S-SSBs in the slot are identified by at least one of the following manners: explicitly indicating, by adding a field in the PSBCH included in each S-SSB, a relative index of the corresponding S-SSB; or scrambling, by using a relative index of each S-SSB in the slot, a De-Modulation Reference Signal (DMRS) sequence initial value in the PSBCH included in each the S-SSB.

According to another embodiment of the present disclosure, provided is a resource mapping device, including: a first acquiring module, configured to acquire resource mapping positions of a Sidelink Synchronization Signal/Physical Sidelink Broadcast Channel block (S-SSB) on an unlicensed spectrum; and a mapping module, configured to map the S-SSB on the unlicensed spectrum based on the resource mapping positions.

According to still another embodiment of the present disclosure, provided is a computer readable storage medium. The computer readable storage medium stores a computer program, and the computer program, when executed by a processor, causes the processor to implement the operations in any one of the method embodiments.

According to yet another embodiment of the present disclosure, provided is an electronic device, including a memory and a processor, wherein the memory stores a computer program, and the processor is configured to run the computer program so as to execute the operations in any one of the method embodiments.

**Brief Description of the Drawings**

Fig. 1-1 is a schematic diagram of slot symbols configured with a Normal CP in the related art;

Fig. 1-2 is a schematic diagram of slot symbols configured with an Extended CP in the related art;

Fig. 2 is a schematic diagram illustrating a wireless frequency signal coding of an index of 66 among 132 subcarriers in the S-SSB frequency domain in the related art;

Fig. 3 is a flowchart of a resource mapping method according to some embodiments of the present disclosure;

Fig. 4 is a flowchart of a resource mapping method according to some embodiments of the present disclosure;

Fig. 5-1 is a first schematic diagram of an S-SSB configured in a slot under a Normal CP according to some embodiments of the present disclosure;

Fig. 5-2 is a second schematic diagram of a resource position in a slot under a Normal CP according to some embodiments of the present disclosure;

Fig. 5-3 is a third schematic diagram of an S-SSB configured in a slot under a Normal CP according to some embodiments of the present disclosure;

Fig. 6 is a schematic diagram of a resource position of an S-SSB configured in a slot under an Extended CP according to some embodiments of the present disclosure; and

Fig. 7 is a structural block diagram of a resource mapping device according to some embodiments of the present disclosure.

## Detailed Description of the Embodiments

The embodiments of the present disclosure will be described below in detail with reference to the accompanying drawings and in conjunction with embodiments.

It should be noted that, terms such as "first" and "second" in the specification, claims, and accompanying drawings of the present disclosure are used to distinguish similar objects, but are not necessarily used to describe a specific sequence or order.

In the related art, the S-SSB resource defined in the legacy Rel-16/Rel-17 SL protocol occupies all symbols except the last symbol in the whole slot in the time domain, and occupies 11 RBs in the frequency domain. The frequency domain position of a specific S-SSB resource is obtained via configured or pre-configured higher layer signaling sl-AbsoluteFrequencyS-SSB.

When an SL device works on an unlicensed spectrum, an S-SSB resource on an SL also needs to be configured. In order to meet an OCB requirement on the unlicensed spectrum, generally, the signal transmission in the frequency domain either occupies more than 80% of consecutive RB resources on one RBset or occupies at least one interleaving on the RBset. Since the number of RBs on one RBset or the number of RBs on at least one interleaving on one RBset is not 11 in many cases, a problem will arise in directly following the frequency domain resource mapping scheme for legacy Rel-16/Rel-17 SL S-SSB. The embodiments of the present disclosure propose a method for determining a position of a frequency domain resource of the S-SSB, and further solve the problem of frequency domain resource mapping of an SL S-SSB resource on an unlicensed spectrum.

The present disclosure will be described below with reference to the embodiments.

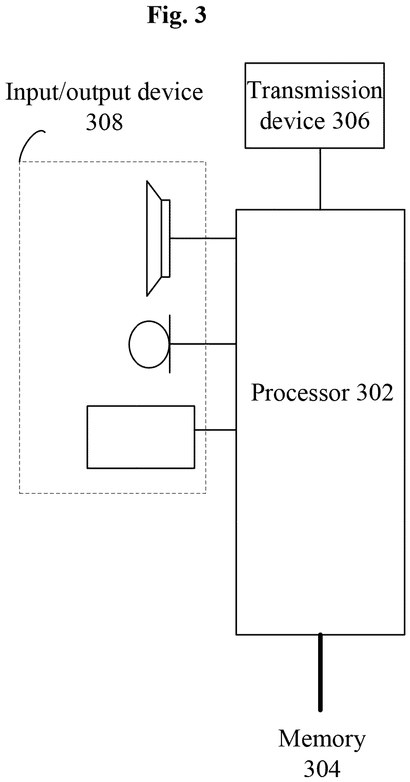

The method embodiments provided in the embodiments of the present disclosure may be implemented in a mobile terminal, a computer terminal, or a similar computing apparatus. Taking the running on the mobile terminal as an example, Fig. 3 is a block diagram illustrating the hardware structure of a mobile terminal for implementing a resource mapping method according to some embodiments of the present disclosure. As shown in Fig. 3, the mobile terminal may include one or more processors 302 (only one is shown in Fig. 3) (each of the one or more processors 302 may include, but is not limited to, a microprocessor (e.g., a processing apparatus such as a Micro Controller Unit (MCU) or a Field Programmable Gate Array (FPGA)) and a memory 304 configured to store data. The mobile terminal may further include a transmission device 306 configured to perform a communication function and an input/output device 308. Those having ordinary skill in the art may understand that the structure shown in Fig. 3 is merely exemplary, which does not limit the structure of the foregoing mobile terminal. For example, the mobile terminal may further include more or fewer components than shown in Fig. 3, or have a different configuration from that shown in Fig. 3.

The memory 304 may be configured to store a computer program, for example, a software program and a module of application software, such as a computer program corresponding to the resource mapping method in the embodiments of the present disclosure. The one or more processors 302 run the computer program stored in the memory 304, so as to execute various function applications and data processing, that is, to implement the foregoing method. The memory 304 may include a high-speed random access memory, and may also include a non-volatile memory, such as one or more magnetic storage devices, flash memory, or other non-volatile solid-state memory. In some instances, the memory 304 may further include a memory remotely located with respect to the one or more processors 302, which may be connected to the mobile terminal over a network. Examples of such network include, but are not limited to, the Internet, an intranet, a local area network, a mobile communication network, and combinations thereof.

The transmission device 306 is configured to receive or transmit data via a network. Specific examples of the described network may include a wireless network provided by a communication provider of the mobile terminal. In an example, the transmission device 306 may include a Network Interface Controller (NIC) that may be coupled to other network devices via a base station to communicate with the Internet. In an example, the transmission device 306 may be a Radio Frequency (RF) module configured to communicate with the Internet in a wireless manner.

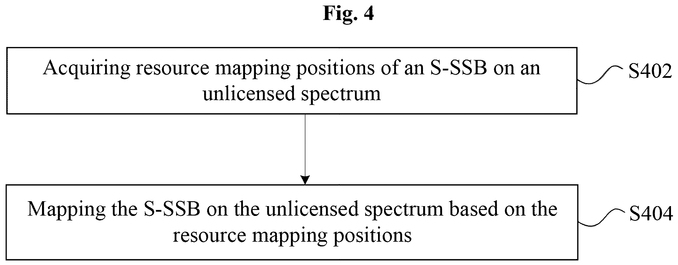

The embodiments of the present disclosure provide a resource mapping method. Fig. 4 is a flowchart of a resource mapping method according to some embodiments of the present disclosure. As shown in Fig. 4, the resource mapping method includes the following operations S402 and S404.

In operation S402, resource mapping positions of a Sidelink Synchronization Signal/Physical Sidelink Broadcast Channel block (S-SSB) on an unlicensed spectrum are acquired.

In operation S404, the S-SSB is mapped on the unlicensed spectrum based on the resource mapping positions.

The foregoing operations may be performed by a device with a signal transceiving capability, for example, a terminal device, or a processor or a processing module in the terminal device, or another processing device or processing unit with a processing capability similar to that of the terminal device. The unlicensed spectrum may also be referred to as an unlicensed carrier.

In the foregoing embodiment, resource mapping positions of an S-SSB on an unlicensed spectrum may be acquired, and then the S-SSB may be mapped on the unlicensed spectrum based on the resource mapping positions. The resource mapping method solves the technical problem that resource mapping for an SL S-SSB cannot be effectively performed on an unlicensed spectrum in the related art, and achieves the technical effect of implementing effective resource mapping of the S-SSB on the unlicensed spectrum.

In an exemplary embodiment, the resource mapping positions include at least one of: at least one Interleaved Resource Block (IRB) within a first Resource Block set (RBset); or a first predetermined number of consecutive Resource Blocks (RBs) included in a second Resource Block set (RBset). In the present embodiment, there may be a plurality of IRBs in the first RBset, and the resource mapping positions may include one or more IRBs in the first RBset. For example, the resource mapping positions may include one IRB in the first RBset, or include two IRBs in the first RBset (the two IRBs may be consecutive, and certainly may also be non-consecutive in practical applications). In addition, the resource mapping positions may also include more IRBs in the first RBset, and the number of IRBs in the first RBset may be set based on practical situations. In the described embodiment, the resource mapping positions may further include a first predetermined number of consecutive RBs within a plurality of first RBsets. In this case, the first predetermined number may be set as 11; and certainly, in subsequent development, insofar as the technology allows, the first predetermined number may also be set as a larger number. In practical applications, the first predetermined number of RBs preferably may be multiple consecutive RBs; or the first predetermined number of RBs may also be multiple non-consecutive RBs, for example, multiple RBs with relatively balanced distribution.

In an exemplary embodiment, the operation of acquiring the resource mapping positions of the S-SSB on the unlicensed spectrum includes: in a case of determining that the S-SSB needs to be mapped onto one IRB in the first RBset, determining, based on received first higher layer signaling, an Absolute Radio Frequency Channel Number (ARFCN) of a target subcarrier index included in the S-SSB; and determining RBs at a first predetermined position on a first IRB of the RBset where the ARFCN is located as the resource mapping positions. In the present embodiment, in order to ensure uniform setting, when the S-SSB is mapped onto one IRB in the first RBset, the S-SSB may be mapped according to resources of 10 RBs uniformly; and when the S-SSB is mapped onto more than one IRB in the first RBset, the number of RBs occupied by the S-SSB may be flexibly set, for example, may be set as 10, 11 or 20. It should be noted that the described example of the number of RBs is only an exemplary embodiment, and the number of RBs is not limited to the described example.

In an exemplary embodiment, the operation of mapping the S-SSB on the unlicensed spectrum based on the resource mapping positions includes: determining a number of symbols to be punctured in a Sidelink Primary Synchronization Signal (S-PSS) and a Sidelink Secondary Synchronization Signal (S-SSS) included in the S-SSB, and performing symbol puncturing on the S-PSS and the S-SSS based on the number of symbols; performing rate matching on a Physical Sidelink Broadcast Channel (PSBCH) included in the S-SSB based on time domain Orthogonal Frequency Division Multiplexing (OFDM) symbols of the S-SSB; and mapping the S-PSS and the S-SSS after the symbol puncturing, and the PSBCH after the rate-matching onto the RBs at the first predetermined position on the first IRB on the corresponding time domain OFDM symbols on the S-SSB. In the present embodiment, in the case where the time domain position of the S-SSB remains the same as that defined in the legacy SL S-SSB, symbol puncturing is performed on the S-SSS and the S-PSS included in the S-SSB, rate matching is performed on the PSBCH included in the S-SSB based on the time domain OFDM symbols of the S-SSB, and the S-PSS and the S-SSS after the symbol puncturing, and the PSBCH after the rate matching are mapped to the RBs at the first predetermined position on the first IRB of the corresponding time domain OFDM symbols on the S-SSB; the ARFCN of the 61st subcarrier index in the S-SSB indicated by the first higher layer signaling (it should be noted that, if the subcarrier index of the S-SSB ranges from 0 to 119, then the ARFCN of the 61st subcarrier index is 60, certainly, it may also be an ARFCN of a subcarrier index at another position, and selecting the central subcarrier index is a preferred manner) is sent to the UE, and the UE determines, according to the received indication information, 10 RBs (namely, the RBs at the first predetermined position) on the first IRB where the ARFCN is located are determined as the frequency domain resource of the S-SSB, wherein the first predetermined position may be pre-defined, and the specific position for arranging the first predetermined position on the first IRB may also be adjusted based on practical situations. It should be further noted that, the described examples of the subcarrier index, the ARFCN, and the first predetermined position are only illustrative, and the subcarrier index, the ARFCN, and the first predetermined position are not limited to the above examples.

In an exemplary embodiment, the operation of acquiring the resource mapping positions of the S-SSB on the unlicensed spectrum includes: in a case of determining that the S-SSB needs to be mapped onto two IRBs in the first RBset, determining, based on received second higher layer signaling, an Absolute Radio Frequency Channel Number (ARFCN) of a target subcarrier index included in the S-SSB; and determining RBs at a second predetermined position on a second IRB of the RBset where the ARFCN is located and RBs at a third predetermined position on a third IRB having a target position relationship with the second IRB as the resource mapping positions. In the present embodiment, in the case where the time domain position of the S-SSB remains the same as that defined in the legacy SL S-SSB, the S-SSB may be separately mapped onto the RB resources on two consecutive IRBs in the first RBset (in the present embodiment, two IRBs are used as an example for description, in practical applications, the S-SSB may also be mapped respectively to RB resources on more IRBs in the first RBset). For example, 10 RBs may be mapped for each IRB, and the ARFCN of the 61st subcarrier index in the S-SSB indicated by the second higher-layer signaling (if the subcarrier index of the S-SSB ranges from 0 to 119, then the ARFCN of the 61st subcarrier index is 60) is sent to the UE, and the UE determines, according to the received indication information, 20 RBs on 2 IRBs on the RBset where the ARFCN is located (namely, RBs at the second predetermined position on the second IRB and RBs at the third predetermined position on the third IRB having a target position relationship with the second IRB) as the resource mapping positions. The second predetermined position and the third predetermined position may both be preset. The second predetermined position may also be set to 11 RBs on the second IRB, 12 RBs on the second IRB, 13 RBs on the second IRB, etc. The third predetermined position may be set as 1 RB on the third IRB, 2 RBs on the third IRB, 3 RBs on the third IRB, etc. When partial information in the S-SSB is mapped to the RB resources in the second IRB, the remaining information in the S-SSB may be mapped to the RB resources in the third IRB having a target position relationship with the second IRB. In the present embodiment, the target position relationship may include: the third IRB being adjacent to the second IRB and being located in a position prior to the second IRB, or the third IRB being adjacent to the second IRB and being located behind the second IRB. Of course, in practical applications, the third IRB is not necessarily adjacent to the second IRB, for example, the IRB at a position slightly (e.g., 2, 3) apart from the second IRB may also be determined to be the third IRB based on the actual situation. It should be further noted that, the examples of the subcarrier index, the ARFCN, the second predetermined position, and the third predetermined position are only illustrative, and the subcarrier index, ARFCN, the second predetermined position, and the third predetermined position are not limited to the examples described above.

In an exemplary embodiment, the operation of mapping the S-SSB on the unlicensed spectrum based on the resource mapping positions includes: determining a first number of symbols to be punctured in a Sidelink Primary Synchronization Signal (S-PSS) and a Sidelink Secondary Synchronization Signal (S-SSS) included in the S-SSB, and determining a second number of symbols to be punctured in a Physical Sidelink Broadcast Channel (PSBCH) included in the S-SSB; performing symbol puncturing on the first number of symbols at a first position of the S-PSS and the first number of symbols at a second position of the S-SSS, and performing symbol puncturing on the second number of symbols at a third position of the PSBCH; and mapping the S-PSS, the S-SSS and the PBCH after the symbol puncturing onto the RBs at the second predetermined position on the second IRB on corresponding time domain Orthogonal Frequency Division Multiplexing (OFDM) symbols on the S-SSB; and performing symbol puncturing on the first number of symbols at a fourth position of the S-PSS and the first number of symbols at a fifth position of the S-SSS, and performing symbol puncturing on the second number of symbols at a sixth position of the PSBCH; and mapping the S-PSS, the S-SSS and the PBCH after the symbol puncturing onto the RBs at the third predetermined position on the third IRB on corresponding time domain OFDM symbols on the S-SSB, wherein the first position is different from the fourth position, the second position is different from the fifth position, and the third position is different from the sixth position. In the present embodiment, consecutive symbols may be punctured, or non-consecutive symbols may be punctured. However, it needs to be ensured that positions of the first number of punctured symbols are different from positions of the second number of punctured symbols, so that the receiving side may combine partial S-SSB data at different positions on the two IRBs to recover complete S-SSB data.

In an exemplary embodiment, the operation of mapping the S-SSB onto the at least one IRB within the first RBset based on the resource mapping positions includes at least one of: dividing Resource Elements (REs) included in the RBs at the second predetermined position on the second IRB and REs included in the RBs at the third predetermined position on the third IRB into a plurality of RE groups; respectively selecting the same or different number of REs from each RE group in the plurality of RE groups, a total number of REs selected from the plurality of RE groups being a second predetermined number of REs included in the first predetermined number of RBs; and mapping the S-SSB onto the second predetermined number of REs on corresponding time domain Orthogonal Frequency Division Multiplexing (OFDM) symbols on the S-SSB; or determining the first predetermined number of RBs in the RBs at the second predetermined position on the second IRB and the RBs at the third predetermined position on the third IRB according to a frequency domain pattern; and mapping the S-SSB onto the determined first predetermined number of RBs on the corresponding time domain OFDM symbols on the S-SSB. In the present embodiment, the REs included in the RBs at the second predetermined position on the second IRB and the REs included in the RBs at the third predetermined position on the third IRB are divided into a plurality of RE groups, for example, divided into 10 RE groups (certainly, the REs may also be divided into other number of RE groups, and it is a preferable manner to divide the REs into 10 RE groups). One RE group may include 24 consecutive REs, which is equivalent to two RBs. The same number of REs or different numbers of REs may be selected from each RE group in the 10 RE groups. For example, 10 REs may be selected from each RE group in the 10 RE groups; or 14 REs may be selected from 2 RE groups in the 10 RE groups, and 10 REs may be selected from each of the remaining 8 RE groups in the 10 RE groups. The number of the REs may be set according to actual requirements, and may also be adjusted according to actual applications. In addition, the second predetermined number may be set as a preset value, for example, 130, 132, 134, etc. For example, when the first predetermined number is set as 132, the S-SSB may be mapped onto 132 REs on the corresponding OFDM symbols on the S-SSB.

In an exemplary embodiment, the operation of acquiring the resource mapping positions of the S-SSB on the unlicensed spectrum includes: in a case of determining that the S-SSB needs to be mapped onto the first predetermined number of consecutive RBs included in the second RBset, determining, based on received second higher layer signaling, an Absolute Radio Frequency Channel Number (ARFCN) of a target subcarrier index included in the S-SSB; determining a plurality of target frequency domain resources based on the ARFCN, wherein each of the plurality of target frequency domain resources includes a second predetermined number of consecutive sub-carriers or a first predetermined number of consecutive RBs; and determining positions of the plurality of target frequency domain resources as the resource mapping positions. In the present embodiment, when the first predetermined number is 11, in a case of determining that the S-SSB needs to be mapped onto 11 consecutive RBs included in the second RBset, the ARFCN of the 67th subcarrier index (or another subcarrier index) included in the S-SSB may be determined based on the received second higher layer signaling, and then the UE may determine, based on the ARFCN in the indication information, he 132 REs as the resource mapping positions of the S-SSB.

In an exemplary embodiment, the operation of mapping the S-SSB on the unlicensed spectrum based on the resource mapping positions includes: repeatedly mapping the S-SSB onto each of the target frequency domain resources on corresponding time domain Orthogonal Frequency Division Multiplexing (OFDM) symbols of the S-SSB. In the present embodiment, by repeatedly mapping the S-SSB to each target frequency domain resource on the corresponding time domain OFDM symbols on the S-SSB, it can be ensured that the receiving end can receive a complete S-SSB.

In an exemplary embodiment, in a case of mapping the S-SSB onto the at least one IRB within the first RBset based on the resource mapping positions, no signal is transmitted on all RBs on an IRB adjacent to the at least one IRB, onto which the S-SSB is mapped, within the first RBset. In the present embodiment, when the S-SSB is mapped onto the at least one IRB in the first RBset based on the resource mapping positions, in order to prevent the S-SSB from interfering with other signals or channels in the same RBset (i.e., the first RBset), all RBs in the IRB adjacent to the at least one IRB used for mapping the S-SSB in the first RBset are used as gaps, and no signal is transmitted on these gaps.

In an exemplary embodiment, in a case of mapping the S-SSB onto the second predetermined number of REs, no signal is transmitted on REs, onto which the S-SSB is not mapped, in the second IRB and the third IRB of the first RBset. In the present embodiment, when the S-SSB is mapped to the second predetermined number of REs, all UEs do not transmit any signal on REs without mapped data or sequences in the RBs on the second IRB and the RBs on the third IRB in the first RBset where the S-SSB is located, and these REs are used as gaps to avoid interference with other signals or channels of frequency division multiplexed with the S-SSB in the first RBset.

In an exemplary embodiment, the resource mapping method may further include operations of: acquiring predetermined target information, wherein the target information includes the following information: a start position of N S-SSBs including the S-SSB within a target slot, wherein N is an integer greater than or equal to 1; a time domain length of the S-SSB; a time-frequency resource position of a Sidelink Primary Synchronization Signal (S-PSS) within the S-SSB; a time-frequency resource position of a Sidelink Secondary Synchronization Signal (S-SSS) within the S-SSB; a time-frequency resource position of a Physical Sidelink Broadcast Channel (PSBCH) within the S-SSB; and determining a time-frequency domain resource for transmitting the S-SSB based on the target information. In the present embodiment, in the case where the time domain position of the S-SSB is different from that defined in the legacy SL S-SSB, a plurality of S-SSBs may be included in one target slot, and regarding one S-SSB, there may be only PSBCHs on some symbols in the S-SSB, while there may be S-PSSs/S-SSSs frequency division multiplexed with the PSBCHs on some other symbols. RBs occupied by the S-SSB in the frequency domain need to satisfy the requirement of the OCB of the unlicensed spectrum, that is, occupying more than 16M bandwidth on the RBset.

In an exemplary embodiment, in a case where N is greater than 1, indexes of the N S-SSBs in the slot are identified by at least one of the following manners: explicitly indicating, by adding a field in the PSBCH included in each S-SSB, a relative index of the corresponding S-SSB; or scrambling, by using a relative index of each S-SSB in the slot, a De-Modulation Reference Signal (DMRS) sequence initial value in the PSBCH included in each the S-SSB. In the present embodiment, when a plurality of S-SSBs exist in one slot, the UE needs to distinguish an index of the current S-SSB in the slot, so that the UE may determine, according to the index, an ARFCN corresponding to the index, and may determine, based on the ARFCN, resource mapping positions corresponding to the current S-SSB, in other words, the UE may determine the ARFCN corresponding to each index according to the index corresponding to each S-SSB in the plurality of S-SSBs, and may further determine the resource mapping positions corresponding to each S-SSB in the plurality of S-SSBs according to the ARFCN.

The above embodiments are only some but not all of the embodiments of the present disclosure.

The present disclosure will be described below in detail in conjunction with exemplary embodiments.

In the embodiments of the present disclosure, the mapping of the S-SSB may be performed in two manners. The first manner is that the S-SSB resources are mapped onto at least one IRB within an RBset (corresponding to the described first RBset). The second manner is that the S-SSB is mapped onto consecutive RBs within the RBset (corresponding to the described second RBset).

(1) For the case that the S-SSB is mapped onto the at least one IRB in the RBset, since the number of RBs included in the IRB in the RBset is configured, the number of RBs may be 10 or 11. In order to ensure a unified design, when the S-SSB is mapped onto one IRB in the RBset, the S-SSB is mapped according to resources of 10 RBs in a unified manner. When the S-SSB is mapped onto more than one IRB in the RBset, the number of RBs occupied by the SSB in the frequency domain can be designed flexibly, for example, 10 or 11 or 20, etc.

(2) For the case that the S-SSB is mapped to consecutive RBs in the RBset, the size of legacy frequency domain resources may continue to be used, i.e., 11 RBs may be used. Such a design may multiplex legacy SL S-SSB as much as possible.

The mapping of the S-SSB is described below with reference to a specific solution as an example.

Scheme 1:

The scheme is described with respect to a method involving mapping within one interleaving, S-PSS/S-SSS symbol puncturing, and PSBCH rate matching (S-SSB resources are mapped on at least one IRB in the RBset).

S-SSS and S-PSS symbols of the S-SSB are punctured, PSBCH symbols are rate matched at a physical layer rate, and then the symbols are mapped onto ten RBs in the frequency domain. A higher layer signaling (corresponding to the described first higher layer signalling) indicates an ARFCN (corresponding to the described Absolute Radio Frequency Channel Number) of the 61st subcarrier index (corresponding to the described target subcarrier index) in the S-SSB to the UE, and the UE determines, according to the instruction information, 10 low frequency RBs (corresponding to the RBs in the first predetermined position) on the interleaved RBs (corresponding to the described first IRB) of an RBset where the ARFCN is located as the frequency domain resources (corresponding to the described resource mapping positions) of the S-SSB.

The specific way of implementing Scheme 1 is described below.

Assume that the time domain symbol positions of the S-SSB remain the same as legacy time domain symbol position:

(1) 7 symbols among 127 symbols of a synchronization sequence (S-PSS, S-SSS) (127 symbols represent modulation symbols mapped to 127 REs) are punctured, and then the remaining symbols are mapped to 10 RBs. The puncturing may be implemented in any of the following manners:

a. puncturing the first 7 symbols;

b. puncturing the last 7 symbols;

c. puncturing the first 3 symbols and the last 4 symbols;

d. puncturing the first 4 symbols and the last 3 symbols;

e. puncturing 7 symbols evenly, for example, starting from the Nth symbol, puncturing one symbol at an interval of 19 symbols, wherein N >= 1 and N <= 13;
for example: when N=1, the 1st, 20th, 39th, 58th, 77th, 96th, and 115th symbols are punctured;

f. puncturing 7 symbols evenly, for example, starting from the Nth symbol, puncturing one symbol at an interval of 19 symbols in an inverse direction, wherein N<=127 and N >= 115.

It should be noted that, the above puncturing manners are only some examples, other puncturing manners capable of puncturing seven symbols are also feasible in principle, and the puncturing manners in subsequent embodiments are also similar, which are not described herein again.

(2) PBCH:

A legacy PSBCH including a DMRS occupies 132 REs in one OFDM symbol, wherein the DMRS occupies 33 REs, and the PSBCH excluding the DMRS occupies 99 REs in one OFDM symbol. Therefore, the total number of REs occupied by the PSBCH (excluding the DMRS) in the whole S-SSB slot is:

Normal CP: 99*9=891;

Extended CP: 99*7=693.

The modulation method of the PBCH is QPSK, and therefore, the length of a sequence for rate matching the PBCH in an SL physical layer of legacy is:

Normal CP: 99*9*2=1782;

Extended CP: 99*7*2=1386.

Therefore, in order to map the PSBCH in 10 RBs, the number of REs occupied by the DMRS in the 10 RBs is 10*3=30, then the number of REs available for the PSBCH (excluding the DMRS) on one OFDM symbol is 90. Considering that the number of time domain symbols of the PSBCH and the modulation scheme remain the same as those used in the legacy, it is necessary to perform rate matching again on the sequence of the PSBCH, and the new length of the rate matching is:

Normal CP: 90*9*2 = 1620, 90 PSBCH symbols are mapped on each OFDM time domain symbol, and the pattern is the same as that used in the legacy;

Extended CP: 90*7*2=1260, 90 PSBCH symbols are mapped to each OFDM time domain symbol, and the pattern is the same as that used in the legacy;

Then the punctured S-PSS/S-SSS and rate-matched PBCH symbols are mapped to S-SSB resources on certain interleaved RBs within the higher layer indicated or pre-configured RBset.

Scheme 2:

The solution is described for two interleaving puncturing methods (S-SSB resource mapping on IRBs in RBset).
The SSB is mapped, in a frequency division manner, on the RB resources of two consecutive interleaved RBs (corresponding to the described two IRBs) in the RBset (corresponding to the described first RBset), and 10 RBs with low frequencies are mapped in each interleaved RB. An ARFCN of the 61st sub-carrier index in the S-SSB is indicated by a higher layer signaling (corresponding to the described second higher layer signalling), and the UE determines, according to the indication information, 20 RBs on the two interleaved RBs of the RBset as frequency domain resources of the S-SSB.
A method for determining the frequency domain resources of the S-SSB is described below. Assuming that an RE position indicated by the ARFCN is located on the Nth interleaved RB on an RBset M, frequency domain positions of the SSB are 10 low frequency RBs (corresponding to RBs at the second predetermined position) on the Nth interleaved RB (corresponding to the second IRB) on the RBset M and 10 low frequency RBs (corresponding to RBs at the third predetermined position) on the (N+1)th interleaved RB (corresponding to the third IRB) on the RBset M, or frequency domain positions of the SSB are 10 low frequency RBs on the Nth interleaved RB on the RBset M and 10 low frequency RBs on the (N-1)th interleaved RB (corresponding to the third IRB) on the RBset M.

(1) A specific S-PSS/S-SSS puncturing manner:

On the first interleaved RB (corresponding to the described second IRB), it is necessary to puncture 7 symbols from the 127 symbols of the S-SSS of the S-SSB, and the puncturing manners are similar to those provided in Scheme 1;
On the second interleaved RB (corresponding to the third IRB), it is necessary to puncture 7 symbols from the 127 symbols of the S-SSS of the S-SSB, and the puncturing manners are similar to those provided in Scheme 1.

However, it should be ensured that the positions of punctured symbols on the first interleaved RB and the positions of punctured symbols on the second interleaved RB are different.

(2) PSBCH puncturing manner:

A legacy PSBCH including a DMRS occupies 132 REs in the frequency domain, the PSBCH symbols are mapped onto 132 REs on one OFDM symbol, 12 symbols are punctured from the 132 REs, and then the rest symbols are mapped onto 120 REs. The PSBCH excluding the DMRS occupies 99 REs, and the DMRS in 10 RBs occupies 30 REs. 9 symbols need to be punctured from 99 symbols of the PSBCH (excluding DMRS), and then the remaining symbols are mapped onto 90 REs. The specific puncturing manners are provided as follows:

    a. puncturing the first 9 symbols from the 99 symbols;

    b. puncturing the last 9 symbols from the 99 symbols;

    c. starting from the Nth (N is greater than or equal to 1, N>=1 and N<=11) symbol, puncturing one symbol at an interval of 11 symbols;
    for example, when N=1, the 1st, 12th, 23th, 34th, 45th, 56th, 67th, 78th, and 89th symbols are punctured;

    d. starting from the Nth (N>=89, and N<=99) symbol in the 99 symbols, puncturing one symbol at an interval of 11 symbols in an inverse direction;
    for example, when N=99, the 99th, 88th, 77th, 66th, 55th, 44th, 33th, 22th, and 11th symbols are punctured;

    e. puncturing the first 4 symbols and the last 5 symbols from the 99 symbols;

    f. puncturing the first 5 symbols and the last 4 symbols from the 99 symbols.

There are 10 RBs on each of the two interleaved RBs, and the S-PSS/S-SSS/PSCH are punctured on each of the interleaved RBs according to the above manners, but positions of the punctured symbols of the same signals or channels on the two interleaved RBs are different. For the determined 20 RBs of the SSB in the frequency domain, the punctured S-PSS/S-SSS/PSCH are mapped to 10 RBs on the two interleaved RBs, respectively.

Scheme 3:

The scheme is described with respect to a frequency domain repeat mapping method (the S-SSB is mapped on consecutive RBs in an RBset).
Here, the S-SSB occupies 11 RBs in the frequency domain, and a higher layer signaling (corresponding to the described second higher layer signalling) indicates a frequency domain position ARFCN1 of the 67th subcarrier index of the S-SSB to the UE. The UE determines, according to the indicated index ARFCN1, 132 subcarriers as S-SSB frequency domain resources 1 (corresponding to the described plurality of target frequency domain resources), and further determines the resource positions of other S-SSB in the RBset. The following determination method may be used.
If ARFCN 1+65+K*66*2 is within the RBset, then ARFCN 1+K*66*2 is the position of the 67th subcarrier index of another S-SSB, the value of K being [-10, -9, -8, -7, -6, -5, -4, -3, -2, -1, 1, 2, 3, 4, 5, 6, 7, 8, 9, 10], and finally the UE determines the positions of the frequency domain resources of M S-SSBs, wherein each S-SSB is distributed on 132 consecutive REs in the frequency domain, and the UE repeatedly maps data of the S-SSB on each S-SSB resource (corresponding to each target frequency domain resource mentioned above).

Scheme 4:

The scheme is described with respect to a two interleaved RBs based method (S-SSB resources are mapped to the IRB in the RBset).
The S-SSB is mapped, in a frequency division manner, on the RB resources of two consecutive interleaved RBs in the RBset, and 10 RBs with low frequencies are mapped in each of the interleaved RBs. A higher layer signaling indicates an ARFCN of the 61th subcarrier index in the S-SSB to the UE, and the UE determines, according to the instruction information, 20 RBs on the two interleaved RBs as the frequency domain resources of the S-SSB.
A method for determining the frequency domain resources of the S-SSB is described below. Assuming that an RE position indicated by the ARFCN is located on the Nth interleaved RB on an RBset M, frequency domain positions of the SSB are 10 low frequency RBs on the Nth interleaved RB on the RBset M and 10 low frequency RBs on the (N+1)th interleaved RB on the RBset M, or frequency domain positions of the SSB are 10 low frequency RBs on the Nth interleaved RB on the RBset M and 10 low frequency RBs on the (N-1)th interleaved RB on the RBset M.

Specifically:

(1) Mapping resources according to the REs:

132 symbols (corresponding to the described second predetermined number of REs) are distributed into 10 RE groups, wherein one RE group includes 24 consecutive REs (namely, two consecutive RBs). From a low frequency to a high frequency, the 1st RE group is mapped with 14 symbols, mapping positions being respectively the 5th RE to the 18th RE of the RE group; each of the 2nd RE group to the 9th RE group is mapped with 13 symbols, mapping positions being respectively the 7th RE to the 19th RE of respective ones of the plurality of RE groups, or being respectively the 6th RE to the 18th RE of respective ones of the plurality of RE groups; and the 10th RE group is mapped with 14 symbols, mapping positions being respectively the 5th RE to the 18th RE of the RE group.

Alternatively, the 1st RE group to the 9th RE group are mapped with 13 symbols, mapping positions being respectively the 7th to the 19th REs of the plurality of RE groups or respectively the 6th to the 18th REs of the plurality of RE groups, and the 10th RE group is mapped with 15 symbols, mapping positions being the 6th to the 20th REs of the RE groups or the 6th to the 18th REs of the RE groups.

Alternatively, the 1st RE group is mapped with 15 symbols, mapping positions being respectively the 6th RE to the 20th RE or the 5th RE to the 19th RE of the RE group; and the 2nd to the 10th RE group are mapped with 13 symbols, mapping positions being respectively the 7th RE to the 19th RE of the plurality of RE groups or respectively the 6th RE to the 18th RE of the plurality of RE groups, or the S-SSB resources may be mapped according to RBs.

In the determined 20 RBs, 11 RBs are determined from the 20 RBs according to a frequency domain pattern. For example, a bitmap with a length of 20 bits corresponds to 20 RBs, and RBs corresponding to bits set to 1 are resources of the S-SSB, wherein there are 11 positions set to 1.

Finally, the UE maps S-SSB symbols on 132 REs on the determined 20 RBs, and mapping rules on the 132 REs are the same as those used in the legacy method, that is, Table 1.

Scheme 5:

The scheme is described with respect to an RB level gap.

When the S-SSB is mapped onto the interleaved RBs (corresponding to the IRBs in the first RBset), for example, in Scheme 1, in order to prevent the S-SSB from interfering with other signals or channels in the same RBset, all the RBs on the interleaved RBs adjacent to the resources of the S-SSB on the RBset serve as gaps, on which no signals will be transmitted.

For example, if the interleaved RB where the S-SSB is located is the nth interleaved RB (n is a positive integer), and the (n+1)th interleaved RB, the (n-1)th interleaved RB, and the nth interleaved RB are in the same RBset, all RBs on the (n+1)th interleaved RB and the (n-1)th interleaved RB are used as gaps in the frequency domain, and all UEs do not transmit any signal on these resources.

For example, if the interleaved RB where the S-SSB is located is the nth interleaved RB, and the nth interleaved RB is the last interleaved RB on the RBset, all RBs on the (n-1)th interleaved RB are used as gaps in the frequency domain, and all UEs do not transmit any signal on these resources.

For example, if the interleaved RB where the S-SSB is located is the nth interleaved RB, and the nth interleaved RB is the first interleaved RB on the RBset, all RBs on the (n+1)th interleaved RB serve as gaps in the frequency domain, and all UEs do not transmit any signal on these resources.

Scheme 6:

The scheme is described with respect to an RE level gap.

When the S-SSB is mapped onto the interleaved RBs (corresponding to the described second predetermined number of REs), for example, in Scheme 4, resources are mapped according to the REs, and on the REs without mapped data or sequence in the interleaved RBs (corresponding to the described second IRB and third IRB in the first RBset) where the S-SSB is located, all the UEs do not transmit any signals on these REs, and these REs serve as gaps to avoid interference between the S-SSB and other signals or channels frequency division multiplexed with the S-SSB in the RBset.

Scheme 7:

This scheme is described with respect to conflicts between S-SSB and S-PSSCH PSFCH.

When the transmission of the S-SSB overlaps the transmission of the PSSCH in the time domain, or the transmission of the S-SSB overlaps the transmission of the PSSCH in the time domain, the UE sends or receives a channel with a high priority according to a priority comparison.

Scheme 8: on a subchannel containing S-SSB resources in the frequency domain, the UE does not perform data resource allocation and does not receive a PSCCH/S-PSSCH; and when an SL UE is sensing a resource, the reported set A does not contain a subchannel with S-SSB resources.

Scheme 9:

The scheme is described with respect to a short symbol S-SSB design.

This scheme is different from Schemes 1 to 4 in that the time domain symbol pattern is no longer the same as that used in the legacy, and a plurality of S-SSBs may exist in one slot.

Configuration or preconfiguration or predefinition:

(1) a start symbol position of N S-SSBs in a slot (corresponding to the described target slot);

(2) the time domain length (the number of symbols) of S-SSB;

(3) a time-frequency resource position of S-PSS in S-SSB;

(4) a time-frequency resource position of S-SSS in S-SSB;

(5) a time-frequency resource position of PSBCH in S-SSB.

Specifically, there may be only PSBCHs on some symbols in the S-SSB, while there may be S-PSSs/S-SSSs frequency division multiplexed with the PSBCHs on some other symbols. RBs occupied by the S-SSB in the frequency domain need to satisfy the requirement of the OCB of the unlicensed spectrum, that is, occupying more than 16M bandwidth on the RBset.

In the time domain:

Legacy S-SSB occupies 13 symbols in the time domain in the slot under the Normal CP, occupies 11 symbols in the time domain in the slot under the Extended CP, and occupies 11 RBs in the frequency domain. In the SL-U, it is considered that the number of symbols of the S-SSB in the slot is less than 7 symbols.

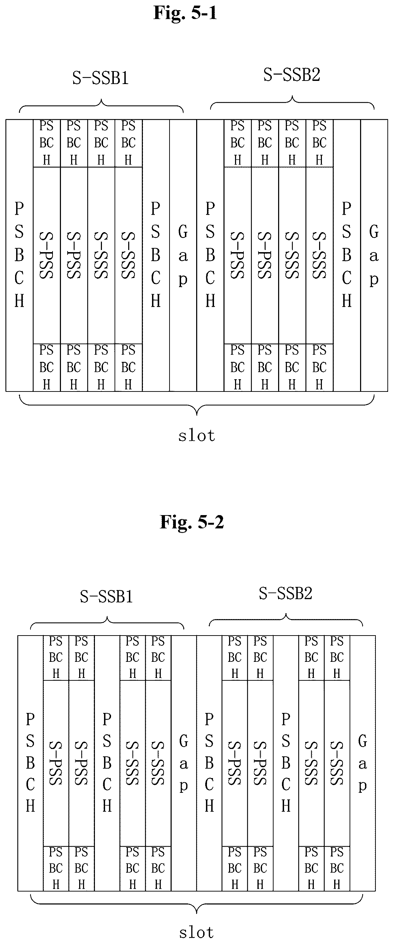

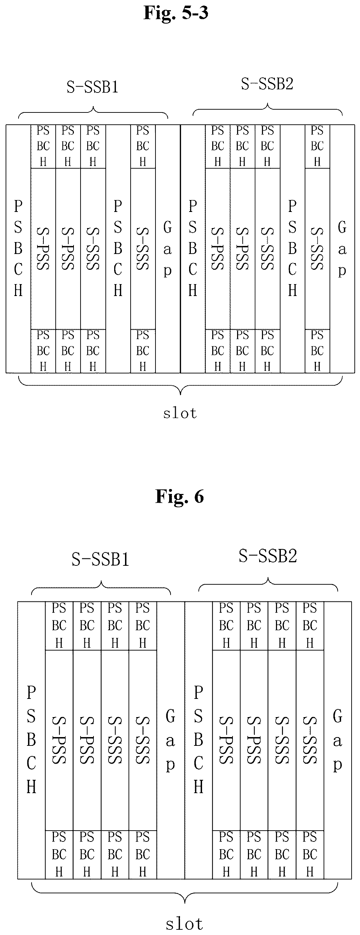

Fig. 5-1 is a first schematic diagram of an S-SSB configured in a slot under a Normal CP according to some embodiments of the present disclosure. Fig. 5-2 is a second schematic diagram of a resource position in a slot under a Normal CP according to some embodiments of the present disclosure. Fig. 5-3 is a third schematic diagram of an S-SSB configured in a slot under a Normal CP according to some embodiments of the present disclosure. As shown in Fig. 5-1, Fig. 5-2, and Fig. 5-3, two S-SSBs are configured in a slot under a Normal CP. A start position of the first S-SSB is the first symbol of the slot and the length of the first S-SSB is six symbols; and a start position of the second S-SSB is the eighth symbol of the slot and the length of the second S-SSB is six symbols.

Fig. 6 is a schematic diagram of a resource position of an S-SSB configured in a slot under an Extended CP according to some embodiments of the present disclosure. As shown in Fig. 6, two S-SSBs are configured in the slot, a start position of the first S-SSB is the first symbol of the slot and the length of the first S-SSB is five symbols; and a start position of the second S-SSB is the seventh symbol of the slot and the length of the second S-SSB is five symbols.

In frequency domain:

A width (the number of REs or the number of RBs) of the S-SSB in the frequency domain and an S-SSB frequency domain mapping pattern are predefined, and the frequency domain positions of the S-SSB are indicated by means of higher layer configuration or pre-configuration signaling. The S-SSB may be distributed in consecutive RBs in the RBset or in interleaved RBs in the RBset in the frequency domain.

Scheme 10:

The scheme is described with respect to an S-SSB index indication in a slot.

When a plurality of S-SSBs exist in a slot, the UE needs to identify an index of the current S-SSB in the slot. One exemplary manner is described below:

a relative index of the S-SSB may be explicitly indicated by adding a field in the PSBCH.

Another exemplary manner is: a DMRS sequence initial value in the PSBCH is scrambled by a relative index of the S-SSB in the slot.

Through the description of the foregoing embodiments, those having ordinary skill in the art may clearly understand that the resource mapping method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product. The computer software product is stored in a storage medium (such as a Read Only Memory (ROM)/Random Access Memory (RAM), a magnetic disk, or an optical disk), and includes several instructions for instructing a terminal device (which may be a mobile phone, a computer, a server, or a network device) to execute the resource mapping methods described in the embodiments of the present disclosure.

The embodiments also provide a resource mapping device, which is configured to implement the described embodiments and exemplary implementations, and what has been described will not be elaborated. The term "module", as used hereinafter, is a combination of software and/or hardware capable of realizing a predetermined function. Although the resource mapping device described in the following embodiments is preferably implemented by software, implementation of hardware or a combination of software and hardware is also possible and conceived.

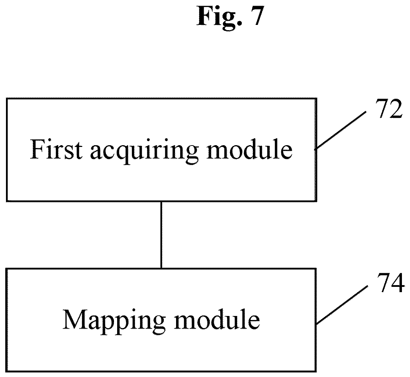

Fig. 7 is a structural block diagram of a resource mapping device according to some embodiments of the present disclosure. As shown in Fig. 7, the resource mapping device includes:

a first acquiring module 72, configured to acquire resource mapping positions of a Sidelink Synchronization Signal/Physical Sidelink Broadcast Channel block (S-SSB) on an unlicensed spectrum; and

a mapping module 74, configured to map the S-SSB on the unlicensed spectrum based on the resource mapping positions.

In an exemplary embodiment, the resource mapping positions may include at least one of:

at least one Interleaved Resource Block (IRB) within a first Resource Block set (RBset); or

a first predetermined number of consecutive Resource Blocks (RBs) included in a second Resource Block set (RBset).

In an exemplary embodiment, the first acquiring module 72 may include:

a first determining sub-module, configured to, in a case of determining that the S-SSB needs to be mapped onto one IRB in the first RBset, determine, based on received first higher layer signaling, an Absolute Radio Frequency Channel Number (ARFCN) of a target subcarrier index included in the S-SSB; and

a second determining sub-module, configured to determine RBs at a first predetermined position on a first IRB of the RBset where the ARFCN is located as the resource mapping positions.

In an exemplary embodiment, the mapping module 74 may include:

a puncturing sub-module, configured to determine a number of symbols to be punctured in a Sidelink Primary Synchronization Signal (S-PSS) and a Sidelink Secondary Synchronization Signal (S-SSS) included in the S-SSB, and performing symbol puncturing on the S-PSS and the S-SSS based on the number of symbols;

a matching sub-module, configured to perform rate matching on a Physical Sidelink Broadcast Channel (PSBCH) included in the S-SSB based on time domain Orthogonal Frequency Division Multiplexing (OFDM) symbols of the S-SSB; and

a first mapping sub-module, configured to map the S-PSS and the S-SSS after the symbol puncturing, and the PSBCH after the rate-matching onto the RBs at the first predetermined position on the first IRB on the corresponding time domain OFDM symbols on the S-SSB.

In an exemplary embodiment, the first acquiring module 72 may further include:

a third determining sub-module, configured to, in a case of determining that the S-SSB needs to be mapped onto two IRBs in the first RBset, determine, based on received second higher layer signaling, an Absolute Radio Frequency Channel Number (ARFCN) of a target subcarrier index included in the S-SSB; and

a fourth determining sub-module, configured to determine RBs at a second predetermined position on a second IRB of the RBset where the ARFCN is located and RBs at a third predetermined position on a third IRB having a target position relationship with the second IRB as the resource mapping positions.

In an exemplary embodiment, the mapping module 74 may include:

a fifth determining sub-module, configured to determine a first number of symbols to be punctured in a Sidelink Primary Synchronization Signal (S-PSS) and a Sidelink Secondary Synchronization Signal (S-SSS) included in the S-SSB, and determine a second number of symbols to be punctured in a Physical Sidelink Broadcast Channel (PSBCH) included in the S-SSB;

a second mapping sub-module, configured to perform symbol puncturing on the first number of symbols at a first position of the S-PSS and the first number of symbols at a second position of the S-SSS, and perform symbol puncturing on the second number of symbols at a third position of the PSBCH; and map the S-PSS, the S-SSS and the PBCH after the symbol puncturing onto the RBs at the second predetermined position on the second IRB on corresponding time domain Orthogonal Frequency Division Multiplexing (OFDM) symbols on the S-SSB; and

a third mapping sub-module, configured to perform symbol puncturing on the first number of symbols at a fourth position of the S-PSS and the first number of symbols at a fifth position of the S-SSS, and perform symbol puncturing on the second number of symbols at a sixth position of the PSBCH; and map the S-PSS, the S-SSS and the PBCH after the symbol puncturing onto the RBs at the third predetermined position on the third IRB on corresponding time domain OFDM symbols on the S-SSB;

wherein the first position is different from the fourth position, the second position is different from the fifth position, and the third position is different from the sixth position.

In an exemplary embodiment, the mapping module 74 may be further configured to map the S-SSB onto the at least one IRB within the first RBset based on the resource mapping positions by at least one of the following manners:

dividing Resource Elements (REs) included in the RBs at the second predetermined position on the second IRB and REs included in the RBs at the third predetermined position on the third IRB into a plurality of RE groups; respectively selecting the same or different number of REs from each RE group in the plurality of RE groups, a total number of REs selected from the plurality of RE groups being a second predetermined number of REs included in the first predetermined number of RBs; and mapping the S-SSB onto the second predetermined number of REs on corresponding time domain Orthogonal Frequency Division Multiplexing (OFDM) symbols on the S-SSB; or

determining the first predetermined number of RBs in the RBs at the second predetermined position on the second IRB and the RBs at the third predetermined position on the third IRB according to a frequency domain pattern; and mapping the S-SSB onto the determined first predetermined number of RBs on the corresponding time domain OFDM symbols on the S-SSB.

In an exemplary embodiment, the first acquiring module 72 may further include:

a sixth determining sub-module, configured to, in a case of determining that the S-SSB needs to be mapped onto the first predetermined number of consecutive RBs included in the second RBset, determine, based on received second higher layer signaling, an Absolute Radio Frequency Channel Number (ARFCN) of a target subcarrier index included in the S-SSB;

a seventh determining sub-module, configured to determine a plurality of target frequency domain resources based on the ARFCN, wherein each of the plurality of target frequency domain resources includes a second predetermined number of consecutive sub-carriers or a first predetermined number of consecutive RBs; and

an eighth determining sub-module, configured to determine positions of the plurality of target frequency domain resources as the resource mapping positions.

In an exemplary embodiment, the mapping module 74 may further include:
a fourth mapping sub-module, configured to repetitively map the S-SSB onto each of the target frequency domain resources on corresponding time domain Orthogonal Frequency Division Multiplexing (OFDM) symbols of the S-SSB.

In an exemplary embodiment, in a case of mapping the S-SSB onto the at least one IRB within the first RBset based on the resource mapping positions, no signal is transmitted on all RBs on an IRB adjacent to the at least one IRB, onto which the S-SSB is mapped, within the first RBset.

In an exemplary embodiment, in a case of mapping the S-SSB onto the second predetermined number of REs, no signal is transmitted on REs, onto which the S-SSB is not mapped, in the second IRB and the third IRB of the first RBset.

In an exemplary embodiment, the resource mapping device may further include:

a second acquiring module, configured to acquire predetermined target information, wherein the target information includes the following information: a start position of N S-SSBs including the S-SSB within a target slot, wherein N is an integer greater than or equal to 1; a time domain length of the S-SSB; a time-frequency resource position of a Sidelink Primary Synchronization Signal (S-PSS) within the S-SSB; a time-frequency resource position of a Sidelink Secondary Synchronization Signal (S-SSS) within the S-SSB; a time-frequency resource position of a Physical Sidelink Broadcast Channel (PSBCH) within the S-SSB; and

a determining module, configured to determine a time-frequency domain resource for transmitting the S-SSB based on the target information.

In an exemplary embodiment, in a case where N is greater than 1, indexes of the N S-SSBs in the slot are identified by at least one of the following manners:

explicitly indicating, by adding a field in the PSBCH included in each S-SSB, a relative index of the corresponding S-SSB; or

scrambling, by using a relative index of each S-SSB in the slot, a De-Modulation Reference Signal (DMRS) sequence initial value in the PSBCH included in each the S-SSB.

It should be noted that each module may be implemented by software or hardware. The latter may be implemented in the following manner, but is not limited thereto. All the modules are located in a same processor; alternatively, the modules are located in different processors in an arbitrary combination.

The embodiments of the present disclosure also provide a computer readable storage medium. The computer readable storage medium stores a computer program, and the computer program, when executed by a processor, causes the processor to implement the operations in any one of the described method embodiments.

In an exemplary embodiment, the computer readable storage medium may include, but is not limited to, any medium that can store a computer program, such as a Universal Serial Bus (USB) flash drive, a Read-Only Memory (ROM), a Random Access Memory (RAM), a removable hard disk, a magnetic disk, or an optical disc.

The embodiments of the present disclosure further provide an electronic device, including a memory and a processor. The memory stores a computer program. The processor is configured to run the computer program to execute operations in any one of the method embodiments.

**In** an exemplary embodiment, the electronic device may further include a transmission device and an input/output device, wherein the transmission device is connected to the processor, and the input/output device is connected to the processor.

For specific examples in the present embodiment, reference may be made to the examples described in the foregoing embodiments and exemplary embodiments, and details are not repeatedly described in the present embodiment.

Obviously, those having ordinary skill in the art should understand that the various modules or operations disclosed herein can be implemented with general computing devices. The modules or operations can be concentrated on a single computing device or distributed across a network composed of multiple computing devices. The modules or operations can be implemented with program code that is executable by a computing device, thereby allowing the program code to be stored in a storage device for execution by a computing device. **In** some cases, the operations shown or described may be executed in a sequence different from that illustrated or described here, or the modules may be made into individual integrated circuit modules, or multiple modules or operations can be made into a single integrated circuit module. Thus, this disclosure is not limited to any specific combination of hardware and software.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall belong to the scope of protection of the present disclosure.

**Claims**

1. A resource mapping method, comprising:

   acquiring resource mapping positions of a Sidelink Synchronization Signal/Physical Sidelink Broadcast Channel block, S-SSB, on an unlicensed spectrum; and
   mapping the S-SSB on the unlicensed spectrum based on the resource mapping positions.

2. The resource mapping method according to claim 1, wherein the resource mapping positions comprise at least one of:

   at least one Interleaved Resource Block, IRB, within a first Resource Block set, RBset; or
   a first predetermined number of consecutive Resource Blocks, RBs, comprised in a second Resource Block set, RBset.

3. The resource mapping method according to claim 2, wherein the acquiring resource mapping positions of a sidelink Synchronization Signal/Physical Sidelink Broadcast Channel block, S-SSB, on an unlicensed spectrum comprises:

   in a case of determining that the S-SSB needs to be mapped onto one IRB in the first RBset, determining, based on received first higher layer signaling, an Absolute Radio Frequency Channel Number, ARFCN, of a target subcarrier index comprised in the S-SSB; and
   determining RBs at a first predetermined position on a first IRB of the RBset where the ARFCN is located as the resource mapping positions.

4. The resource mapping method according to claim 3, wherein the mapping the S-SSB on the unlicensed spectrum based on the resource mapping positions comprises:

   determining a number of symbols to be punctured in a Sidelink Primary Synchronization Signal, S-PSS, and a Sidelink Secondary Synchronization Signal, S-SSS, comprised in the S-SSB, and performing symbol puncturing on the S-PSS and the S-SSS based on the number of symbols;
   performing rate matching on a Physical Sidelink Broadcast Channel, PSBCH, comprised in the S-SSB based on time domain Orthogonal Frequency Division Multiplexing, OFDM, symbols of the S-SSB; and
   mapping the S-PSS and the S-SSS after the symbol puncturing, and the PSBCH after the rate-matching onto the RBs at the first predetermined position on the first IRB on the corresponding time domain OFDM symbols on the S-SSB.

5. The resource mapping method according to claim 2, wherein the acquiring resource mapping positions of a sidelink Synchronization Signal/Physical Sidelink Broadcast Channel block, S-SSB, on an unlicensed spectrum comprises:

   in a case of determining that the S-SSB needs to be mapped onto two IRBs in the first RBset, determining, based on received second higher layer signaling, an Absolute Radio Frequency Channel Number, ARFCN, of a target subcarrier index comprised in the S-SSB; and
   determining RBs at a second predetermined position on a second IRB of the RBset where the ARFCN is located and RBs at a third predetermined position on a third IRB having a target position relationship with the second IRB as the resource mapping positions.

6. The resource mapping method according to claim 5, wherein the mapping the S-SSB on the unlicensed spectrum based on the resource mapping positions comprises:

   determining a first number of symbols to be punctured in a Sidelink Primary Synchronization Signal, S-PSS, and a Sidelink Secondary Synchronization Signal, S-SSS, comprised in the S-SSB, and determining a second number of symbols to be punctured in a Physical Sidelink Broadcast Channel, PSBCH, comprised in the S-SSB;
   performing symbol puncturing on the first number of symbols at a first position of the S-PSS and the first number of symbols at a second position of the S-SSS, and performing symbol puncturing on the second number of symbols at a third position of the PSBCH; and mapping the S-PSS, the S-SSS and the PBCH after the symbol puncturing onto the RBs at the second predetermined position on the second IRB on corresponding time domain Orthogonal Frequency Division Multiplexing, OFDM, symbols on the S-SSB; and
   performing symbol puncturing on the first number of symbols at a fourth position of the S-PSS and the first number of symbols at a fifth position of the S-SSS, and performing symbol puncturing on the second number of symbols at a sixth position of the PSBCH; and mapping the S-PSS, the S-SSS and the PBCH after the symbol puncturing onto the RBs at the third predetermined position on the third IRB on corresponding time domain OFDM symbols on the S-SSB,

wherein the first position is different from the fourth position, the second position is different from the fifth position, and the third position is different from the sixth position.

7. The resource mapping method according to claim 5, wherein mapping the S-SSB onto the at least one IRB within the first RBset based on the resource mapping positions comprises at least one of:

dividing Resource Elements, REs, comprised in the RBs at the second predetermined position on the second IRB and REs comprised in the RBs at the third predetermined position on the third IRB into a plurality of RE groups; respectively selecting the same or different number of REs from each RE group in the plurality of RE groups, a total number of REs selected from the plurality of RE groups being a second predetermined number of REs comprised in the first predetermined number of RBs; and mapping the S-SSB onto the second predetermined number of REs on corresponding time domain Orthogonal Frequency Division Multiplexing, OFDM, symbols on the S-SSB; or

determining the first predetermined number of RBs in the RBs at the second predetermined position on the second IRB and the RBs at the third predetermined position on the third IRB according to a frequency domain pattern; and mapping the S-SSB onto the determined first predetermined number of RBs on the corresponding time domain OFDM symbols on the S-SSB.

8. The resource mapping method according to claim 2, wherein the acquiring resource mapping positions of a Sidelink Synchronization Signal/Physical Sidelink Broadcast Channel block, S-SSB, on an unlicensed spectrum comprises:

in a case of determining that the S-SSB needs to be mapped onto the first predetermined number of consecutive RBs comprised in the second RBset, determining, based on received second higher layer signaling, an Absolute Radio Frequency Channel Number, ARFCN, of a target subcarrier index comprised in the S-SSB; determining a plurality of target frequency domain resources based on the ARFCN, wherein each of the plurality of target frequency domain resources comprises a second predetermined number of consecutive sub-carriers or a first predetermined number of consecutive RBs; and determining positions of the plurality of target frequency domain resources as the resource mapping positions.

9. The resource mapping method according to claim 8, wherein the mapping the S-SSB on the unlicensed spectrum based on the resource mapping positions comprises:
repeatedly mapping the S-SSB onto each of the target frequency domain resources on corresponding time domain Orthogonal Frequency Division Multiplexing, OFDM, symbols of the S-SSB.

10. The resource mapping method according to claim 2, wherein in a case of mapping the S-SSB onto the at least one IRB within the first RBset based on the resource mapping positions, no signal is transmitted on all RBs on an IRB adjacent to the at least one IRB, onto which the S-SSB is mapped, within the first RBset.

11. The resource mapping method according to claim 7, wherein in a case of mapping the S-SSB onto the second predetermined number of REs, no signal is transmitted on REs, onto which the S-SSB is not mapped, in the second IRB and the third IRB of the first RBset.

12. The resource mapping method according to claim 1, further comprising:

acquiring predetermined target information, wherein the target information comprises the following information: a start position of N S-SSBs comprising the S-SSB within a target slot, wherein N is an integer greater than or equal to 1; a time domain length of the S-SSB; a time-frequency resource position of a Sidelink Primary Synchronization Signal, S-PSS, within the S-SSB; a time-frequency resource position of a Sidelink Secondary Synchronization Signal, S-SSS, within the S-SSB; a time-frequency resource position of a Physical Sidelink Broadcast Channel, PSBCH, within the S-SSB; and determining a time-frequency domain resource for transmitting the S-SSB based on the target information.

13. The resource mapping method according to claim 12, wherein in a case where N is greater than 1, indexes of the N S-SSBs in the slot are identified by at least one of the following manners:

explicitly indicating, by adding a field in the PSBCH comprised in each S-SSB, a relative index of the corresponding S-SSB; or

scrambling, by using a relative index of each S-SSB in the slot, a De-Modulation Reference Signal, DMRS, sequence initial value in the PSBCH comprised in each the S-SSB.

14. A resource mapping device, comprising:

an acquiring module, configured to acquire resource mapping positions of a Sidelink Synchronization Signal/-Physical Sidelink Broadcast Channel block (S-SSB) on an unlicensed spectrum; and
a mapping module, configured to map the S-SSB on the unlicensed spectrum based on the resource mapping positions.

15. A computer readable storage medium, wherein the computer readable storage medium stores a computer program, and the computer program, when executed by a processor, causes the processor to implement operations of the resource mapping method according to any one of claims 1 to 13.

16. An electronic device, comprising a memory and a processor, wherein the memory stores a computer program, and the processor is configured to run the computer program so as to execute the resource mapping method according to any one of claims 1 to 13.

Fig. 1-1

| P S B C H | P S S | P S S | S S S | S S S | P S B C H | P S B C H | P S B C H | P S B C H | P S B C H | P S B C H | P S B C H | P S B C H | G A P |
|---|---|---|---|---|---|---|---|---|---|---|---|---|---|

Fig. 1-2

| P S B C H | P S S | P S S | S S S | S S S | P S B C H | P S B C H | P S B C H | P S B C H | P S B C H | P S B C H | G A P |
|---|---|---|---|---|---|---|---|---|---|---|---|

Fig. 2

131

...

| RRC signaling *sl-AbsoluteFrequencySSB* |

→

66

65

...

0

**Fig. 3**

Input/output device
308

Transmission
device 306

Processor 302

Memory
304

**Fig. 4**

| Acquiring resource mapping positions of an S-SSB on an unlicensed spectrum | S402 |

| Mapping the S-SSB on the unlicensed spectrum based on the resource mapping positions | S404 |

## Fig. 5-1

## Fig. 5-2

**Fig. 5-3**

**Fig. 6**

**Fig. 7**

```
┌─────────────────────────────┐
│                             │ ⟋ 72
│   First acquiring module    │
│                             │
└─────────────────────────────┘
              │
              │
┌─────────────────────────────┐
│                             │ ⟋ 74
│      Mapping module         │
│                             │
└─────────────────────────────┘
```

## INTERNATIONAL SEARCH REPORT

| | International application No. |
|---|---|
| | **PCT/CN2023/108722** |

**A. CLASSIFICATION OF SUBJECT MATTER**

H04W16/00(2009.01)i; H04W72/04(2023.01)i

According to International Patent Classification (IPC) or to both national classification and IPC

**B. FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, CNKI, WPABS, ENTXTC, 3GPP: 边链路, 侧链路, 辅链路, 同步, 广播信息块, 资源, 映射, 位置, 非授权频谱, 感知无线电, 频谱感知, sidelink, SL, map, location, position, unlicensed, spectrum, synchronize, synchronization, information, block, resource, cognitive radio, CR, cognitive, licenced

**C. DOCUMENTS CONSIDERED TO BE RELEVANT**

| Category* | Citation of document, with indication, where appropriate, of the relevant passages | Relevant to claim No. |
|---|---|---|
| PX | CN 115942326 A (ZTE CORPORATION) 07 April 2023 (2023-04-07)<br>claims 1-16 | 1-16 |
| PX | CN 116017733 A (ZTE CORPORATION) 25 April 2023 (2023-04-25)<br>description, paragraphs 42-266, and claims 1-28 | 1-16 |
| X | CN 114765511 A (SPREADTRUM COMMUNICATIONS (SHANGHAI) CO., LTD.) 19 July 2022 (2022-07-19)<br>description, paragraphs 2-64, and claims 1-10 | 1-2, 14-16 |
| A | US 2022086782 A1 (MEDIATEK SINGAPORE PTE. LTD.) 17 March 2022 (2022-03-17)<br>entire document | 1-16 |
| A | US 2022216945 A1 (ZTE CORPORATION) 07 July 2022 (2022-07-07)<br>entire document | 1-16 |
| A | CN 114009116 A (NTT DOCOMO, INC.) 01 February 2022 (2022-02-01)<br>entire document | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 November 2023** | **07 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108722**

| Patent document cited in search report | | | Publication date (day/month/year) | Patent family member(s) | | | Publication date (day/month/year) |
|---|---|---|---|---|---|---|---|
| CN | 115942326 | A | 07 April 2023 | None | | | |
| CN | 116017733 | A | 25 April 2023 | None | | | |
| CN | 114765511 | A | 19 July 2022 | None | | | |
| US | 2022086782 | A1 | 17 March 2022 | WO | 2020143756 | A1 | 16 July 2020 |
| | | | | TW | 202034711 | A | 16 September 2020 |
| | | | | TWI | 747134 | B | 21 November 2021 |
| US | 2022216945 | A1 | 07 July 2022 | EP | 3958491 | A1 | 23 February 2022 |
| | | | | EP | 3958491 | A4 | 18 January 2023 |
| | | | | WO | 2020244438 | A1 | 10 December 2020 |
| CN | 114009116 | A | 01 February 2022 | None | | | |

Form PCT/ISA/210 (patent family annex) (July 2022)

**EP 4 525 501 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210934727